# EUROPÄISCHE PATENTSCHRIFT

(11) **EP 1 765 632 B1**
(45) Veröffentlichungstag und Bekanntmachung des Hinweises auf die Patenterteilung: **13.04.2011**
(21) Anmeldenummer: 05774940.0
(22) Anmeldetag: 14.07.2005
(51) Int. Cl.: B60N 2/015

(54) **SICHERHEITSSYSTEM FÜR EINEN FAHRZEUGSITZ**
SAFETY SYSTEM FOR A VEHICLE SEAT
SYSTEME DE SECURITE POUR SIEGE DE VEHICULE

(30) Priorität: 14.07.2004 DE 102004035479
(43) Veröffentlichungstag der Anmeldung: 28.03.2007
(73) Patentinhaber: Volkswagen Aktiengesellschaft, 38436 Wolfsburg (DE)
(72) Erfinder: NEUMANN, Otto, 38527 Meine (DE); FEUSTEL, Daniel, 38518 Gifhorn (DE)
(74) Vertreter: Schneider, Henry
(86) Internationale Anmeldenummer: PCT/EP2005/007818
(87) Internationale Veröffentlichungsnummer: WO 2006/005629

(56) Entgegenhaltungen:
- DE-U1- 20 206 761
- FR-A- 2 816 556
- GB-A- 2 251 183
- US-A1- 2003 102 705

## Beschreibung

Die Erfindung betrifft ein Sicherheitssystem für einen Fahrzeugsitz, insbesondere für die hintere Sitzreihe eines Kombifahrzeuges, mit den im Oberbegriff des Anspruchs 1 genannten Merkmalen.

Es ist bekannt, dass bei Kombifahrzeugen, so auch beim Transporter-Kombi, zur Gewinnung eines zusätzlichen Nutzraumes für den Gütertransport die Fahrzeugsitze umgeklappt und/oder hochgeklappt werden und zwar unabhängig davon, ob der Kombi bei kurzem Radstand im Fahrgastraum variabel mit bis zu sechs Sitzen oder aber bei langem Radabstand im Fahrgastraum sogar mit sieben Sitzplätzen oder ähnliches bestuhlt ist. Um das zu ermöglichen, gibt es die unterschiedlichsten Anordnungen und Ausbildungen, um ein Umlegen, Zurückklappen oder ein Hochklappen von Teilen eines Fahrzeugsitzes zu ermöglichen, damit innerhalb des Fahrgastraumes das Volumen für den Transport von Gütern vergrößert wird. Dabei können die Fahrzeugsitze in Abhängigkeit von der Ausführung der Klappvorrichtung in eine vordere Position verschoben und zusammengeklappt werden, oder sie können auch mit dem Sitzteil zum Fahrzeugboden hin verschwenkt und flach aufgeklappt werden, so dass die Rückseite des Fahrzeugsitzes einen Teil der Ladefläche bildet. Erfolgt beispielsweise lediglich ein Umklappen der Sitzlehne, so wird das durch Ziehen einer der Lehnenklappung zugeordneten Schlaufe ermöglicht, die über einen Umlenkhebel mit dem Drehgelenk eines in die Sitzlehne integrierten Schwertes in Wirkverbindung steht, so dass eine translatorische Bewegung in eine rotierende Bewegung umgewandelt wird.

Soll jedoch ein zusätzlicher Nutzraum für den Gütertransport, also ein größeres Volumen im Fahrgastraum, so bei einem Transporter-Kombi, bereitgestellt werden, indem die dritte Sitzreihe unabhängig davon, ob sie eine Dreier-Sitzbank bei langem Radstand im Fahrgastraum oder eine Zweier-Sitzbank bei kurzem Radstand im Fahrgastraum ist, vollständig aus dem Fahrgastraum entnommen werden, so ist das mit der Zuordnung von Befestigungssystemen verbunden, zu denen auch eine Sitzverriegelung gehört. Wird die Dreier- beziehungsweise Zweiersitzbank dem Fahrgastraum entnommen, so erfolgt zuvor ebenfalls ein Umklappen der Sitzlehne. Daraus resultiert, dass nach dem Einbau der Dreierbeziehungsweise Zweier-Sitzbank in den Fahrgastraum die Sitzlehne erst wieder in die Sitzposition zurückgeklappt wird.

Gemäß einer bekannten Sitzverriegelung erfolgt die Entriegelung der Sitzbank bei vorgesehener Entnahme aus dem Fahrgastraum durch Ziehen einer der Entnahme zugeordneten Schlaufe, die mit einer Sperrplatte derart in Wirkverbindung steht, dass ihre horizontale Bewegung in eine vertikale Bewegung der Sperrplatte umgewandelt wird. Erfolgt diese Umwandlung, so wird die Sperrplatte nach oben gezogen, so dass eine Entriegelung zwischen der Sperrplatte und einem in den Fahrzeugboden integrierten Pilzbolzen vorgenommen wird, mit dem Ergebnis, dass die Sitzbank zur Entnahme aus dem Fahrgastraum freigegeben ist.

Ausgehend davon, dass die Sitzverriegelung von der Lehnenklappung der Sitzreihe getrennt ist, hat sich jedoch gezeigt, dass die Trennung mit einem relativ großen Sicherheitsrisiko für den Benutzer der Sitzreihe verbunden ist. Das besonders deshalb, weil sich die Sitzlehne nach dem Einbau in den Fahrgastraum bereits aufstellen lässt, ohne zuvor die Sitzverriegelung vorzunehmen. Dass aber bedeutet, dass bei Inbetriebnahme des Kombifahrzeuges eine Verletzungsgefahr des auf der Sitzreihe befindlichen Fahrgastes bedingt durch die nicht verriegelte Sitzreihe nicht auszuschließen ist. Die Trennung der Sitzverriegelung von der Lehnenklappung ist aber auch mit dem Nachteil behaftet, dass die Sitzreihe bereits aus dem Fahrgastraum entnommen werden kann, ohne zuvor ein Umklappen der Sitzlehne vorzunehmen. Das aber erschwert die Entnahme der Sitzreihe aus dem Fahrgastraum.

Aus der 202 06 761 U1, welche als nächstliegender Stand der Technik betrachtet wird, ist, eine Entriegelungsmechanik für einen Fahrzeugsitz bekannt, welcher ein mit einer Fahrzeugstruktur verbindbares Sitzteil und eine Lehne aufweist, die mittels Gelenkbeschlägen relativ zum Sitzteil schwenkbar und verriegelbar ist, wobei die Entriegelungsmechanik eine Lehnenentriegelung zum Entriegeln der Gelenkbeschläge, eine Bodenentriegelung zum wenigstens teilweise Trennen des Sitzteils von der Fahrzeugstruktur und eine manuell bewegliches Betätigungselement mit zwei Bewegungsmöglichkeiten zum Auslösen der Lehnenentriegelung und der Bodenentriegelung.

In der Druckschrift US 2003/0102750 A1 wird eine Sitzverstell- und Verriegelungsvorrichtung eines Sitzes beschrieben, der selektiv mit einem Boden in Eingriff bringbar ist, der einen Abstreifer hat und um eine entfernte Achse in Bezug auf den Boden verschwenkbar ist. GB 2 251 183 A beschreibt einen Sitz für ein Fahrzeug, welcher Sicherungsbauteile enthält, womit die Sitzfläche an der Karosserie des Fahrzeugs gesichert werden soll. Zudem kennt diese Druckschrift einen Hebel, der mit dem Verriegelungseinrichtung des Sitzes in Verbindung steht und welcher verhindert, dass die Sitzfläche besetzt werden kann bevor der Sitz an der Karosserie des Wagens gesichert ist.

Der Erfindung liegt die Aufgabe zugrunde, ein Sicherheitssystem für einen Fahrzeugsitz, insbesondere für die hintere Sitzreihe eines Kombifahrzeuges, entsprechend dem Oberbegriff von Anspruch 1 zu schaffen, durch das beim Einbau des Fahrzeugsitzes und somit auch der Sitzreihe in den Fahrgastraum zur Gewährleistung einer wichtigen Sicherheitsfunktion ein Aufstellen der Sitzlehne der Sitzreihe und damit ihre Benutzung durch einen Fahrgast erst dann ermöglicht wird, wenn zuvor eine Sitzverriegelung vorgenommen wurde, so dass bei Inbetriebnahme des Kombifahrzeuges eine aus einer nicht vorgenommenen Verriegelung sich ergebende Verletzungsgefahr ausgeschlossen wird, wobei gleichzeitig auch zu sichern ist, dass bei einer Entnahme der Sitzreihe aus dem Fahrgastraum die dazu erforderliche Entriegelung erst dann erfolgen kann, wenn zuvor die Sitzlehne umgeklappt ist.

Diese Aufgabe wird erfindungsgemäß durch ein Sicherheitssystem mit den im Anspruch 1 genanten Merkmalen gelöst. Dadurch, dass das Schwert der Sitzlehne über eine Koppelstange mit der der Verriegelung der Sitzreihe dienenden Sperrplatte in Wirkverbindung steht, derart, dass eine vertikale Bewegung der Sperrplatte nach oben und damit eine Entriegelung der Sitzreihe erst dann vornehmbar ist, wenn die Sitzlehne der Sitzreihe eine Tischposition einnehmend umgeklappt ist und ein Zurückklappen der Sitzlehne der Sitzreihe in die Sitzposition erst dann vollziehbar ist, wenn die Verriegelung der Sitzreihe durch die Sperrplatte im Zusammenwirken mit dem Pilzbolzen abgeschlossen ist, die Koppelstange vertikal verschiebbar im Sitzgestell der Sitzreihe angeordnet ist und zur Blockierung ihrer vertikalen Verschiebung nach oben das Schwert der Sitzlehne auf seiner der Koppelstange zugerichteten Seite eine Anformung besitzt, durch die die vertikale Verschiebung der Koppelstange nach oben nach Einnahme der Tischposition der Sitzlehne der Sitzreihe freigebbar ist, wird erreicht, dass durch Kombination des Aufstellens, also des Zurückklappens der Sitzlehne mit der Verriegelung der gesamten Sitzreihe bei einer Fehlmontage beim Einbau der Sitzreihe in den Fahrgastraum des Kombifahrzeuges, beispielsweise durch den Benutzer, und der dadurch nicht erfolgten Verriegelung der Sitzreihe die Sitzlehne nicht aufgestellt und somit die Sitzreihe auch nicht benutzt werden kann. Darüber hinaus wird durch die Wirkverbindung des Schwertes der Sitzlehne mit der der Verriegelung dienenden Sperrplatte durch die Koppelstange aber auch Einfluss auf eine Erleichterung bei der Entnahme der Sitzreihe aus dem Fahrgastraum genommen. Zur Erzielung der durch die Erfindung beabsichtigten Wirkungen ist vorgesehen, dass die Koppelstange vertikal verschiebbar im Sitzgestell der Sitzreihe angeordnet ist und in jeder Position der vertikal bewegbaren Sperrplatte mit ihrem unteren Ende lose mit einem horizontal verlaufenden Abschnitt der Sperrplatte durch Aufliegen in Verbindung steht, während zur Blockierung ihrer vertikalen Verschiebung nach oben das Schwert der Sitzlehne auf seiner der Koppelstange zugerichteten Seite eine Anformung besitzt, durch die die vertikale Verschiebung der Koppelstange nach oben nach Einnahme der Tischposition der Sitzlehne der Sitzreihe freigebbar ist. Dabei besitzt die vertikal verschiebbar im Sitzgestell der Sitzreihe angeordnete Koppelstange vorzugsweise zwei in vertikaler Richtung verlaufende Langlöcher, über die sie im Sitzgestell der Sitzreihe befestigte Führungsbolzen vertikal verschiebbar aufnehmbar ist.

Um in jeder Position der vertikal bewegbaren Sperrplatte ein Aufliegen der vertikal verschiebbar angeordneten Koppelstange mit ihrem unteren Ende auf dem horizontal verlaufenden Abschnitt der Sperrplatte zu gewährleisten, steht die vertikal verschiebbar angeordnete Koppelstange unter der Kraft einer in Richtung der Sperrplatte wirkenden Zugfeder.

Während in weiterer Ausgestaltung der Erfindung der Anformung des Schwertes der Sitzlehne ein am Sitzgestell befestigter, die Anformung und damit das Schwert der Sitzlehne bei ihrem Zurückklappen in die Sitzposition begrenzender Anschlag zugeordnet ist, besitzt die vertikal verschiebbar im Sitzgestell angeordnete Koppelstange auf ihrer dem Schwert der Sitzlehne zugerichteten Seite eine kreissegmentförmige Ausnehmung, so dass die der Blockierung der vertikalen Verschiebung der Koppelstange dienende Anformung des Schwertes beim Umklappen der Sitzlehne bei verriegelter Sitzreihe mit Spiel die vertikal verschiebbar angeordnete Koppelstange passieren kann und diese und damit die der Verriegelung der Sitzreihe dienende Sperrplatte zwecks Vornahme der Entriegelung freigibt.

Damit beim Einbau der Sitzreihe in den Fahrgastraum die Sitzlehne nicht aufgestellt werden kann, bevor die Verriegelung der Sitzreihe erfolgt ist, besitzt gemäß einem weiteren bevorzugten Merkmal der Erfindung die vertikal verschiebbar im Sitzgestell der Sitzreihe angeordnete Koppelstange in ihrem oberen Bereich eine nach oben offene Anformung in Form eines Hakens, der bei Einnahme der Tischposition der Sitzlehne und der sich anschließenden Entriegelung der Sitzreihe in seiner Öffnung das Gelenk aufnimmt, über das die der Lehnenklappung zugeordnete Schlaufe über den Winkelhebel mit dem eine Rastung besitzenden Drehgelenk im Beschlag des Schwertes der Sitzlehne in Verbindung steht.

Ausgehend von der Wirkverbindung des Schwertes der Sitzlehne mit der der Verriegelung der Sitzreihe dienenden Sperrplatte durch die vertikal im Sitzgestell der Sitzreihe vertikal angeordnete Koppelstange besitzt die Sperrplatte zwei in vertikaler Richtung verlaufende Langlöcher, die am Sitzgestell befestigte Führungsbolzen aufnehmen, wobei der untere Führungsbolzen gleichzeitig auch einen durch einen Federkörper belasteten Abfragehebel aufnimmt, durch den die Sperrplatte nach ihrer vertikalen Bewegung nach oben beim Entnehmen der Sitzreihe in ihrer Position haltbar ist. Dabei besitzt der durch den Federkörper belastete Abfragehebel zweckmäßigerweise eine Anformung in Form einer Nase, durch die die Sperrplatte in ihrer die Entnahme der Sitzreihe aus dem Fahrgastraum ermöglichenden Position durch Verhaken arretierbar ist. Von Bedeutung ist bei dieser Ausbildung, dass beim Entnehmen der Sitzreihe aus dem Fahrgastraum der federbelastete Abfragehebel gleichzeitig ein Stück nach hinten schwingt und somit die Sperrplatte in ihrer oberen Position gehalten wird.

Schließlich ist bei dem erfindungsgemäß ausgebildeten Sicherheitssystem die zur Entriegelung der Sitzreihe durch Ziehen betätigbare, der Entnahme zugeordnete Schlaufe mit einem ersten Schenkel eines schwenkbar am Sitzgestell angeordneten Winkelhebels gelenkig verbunden, während dessen zweiter Schenkel gelenkig mit der Sperrplatte in Verbindung steht und rechtwinklig zum ersten Schenkel angeordnet ist.

Selbstverständlich ist das Eintreten der durch die Erfindung beabsichtigten Wirkungen nicht an eine Sperrplatte mit dem zugehörigen, in den Fahrzeugboden integrierten Pilzbolzen gebunden. Vielmehr kann, wenn beispielsweise von einer Dreier-Sitzbank ausgegangen wird, diese in Abhängigkeit von ihrer Ausbildung in ihrer verriegelten Position auch durch vier Sperrplatten mit vier in den Fahrzeugboden integrierten Pilzbolzen kraftschlüssig verbunden sein. Dabei richtet sich die Anzahl der zur Anwendung kommenden, vertikal verschiebbar angeordneten Koppelstangen nach der Anzahl der der Sitzlehne zugeordneten Schwerter.

Weitere bevorzugte Ausgestaltungen der Erfindung ergeben sich aus den übrigen, in den Unteransprüchen genannten Merkmalen.

Die Erfindung wird nachfolgend an einem Ausführungsbeispiel anhand der zugehörigen Zeichnungen näher erläutert. Es zeigen:
- Figur 1: eine Vorderansicht eines Sitzgestells eines Kombifahrzeuges mit einer in dieses integrierten Sitzverriegelung sowie einer der Lehnenklappung zugeordneten Lagerung;
- Figur 2: eine Teilansicht des Sitzgestells nach Figur 1 im Bereich der der Lehnenklappung zugeordneten Lagerung;
- Figur 3: die Teilansicht nach Figur 2 bei umgeklappter Sitzlehne;
- Figur 4: die Einzelheit Z nach Figur 1 in einer perspektivischen Ansicht und
- Figur 5: die Einzelheit Y nach Figur 1.

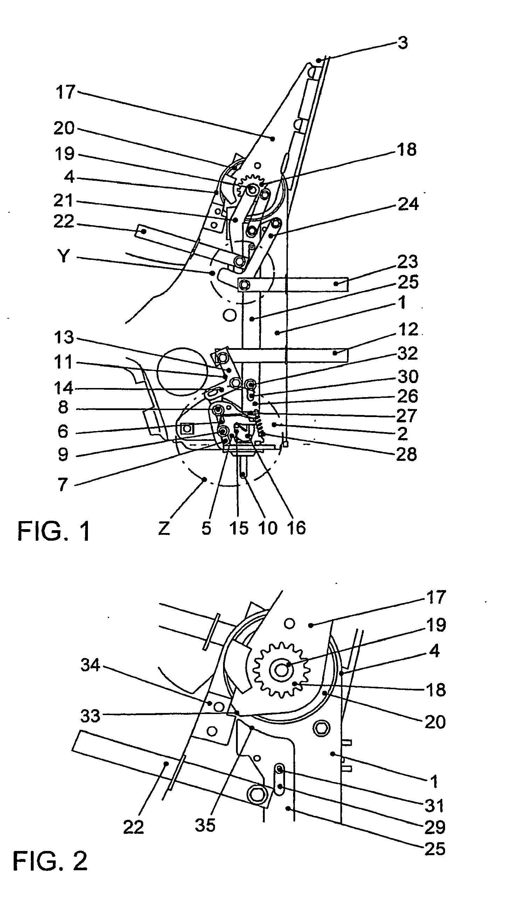

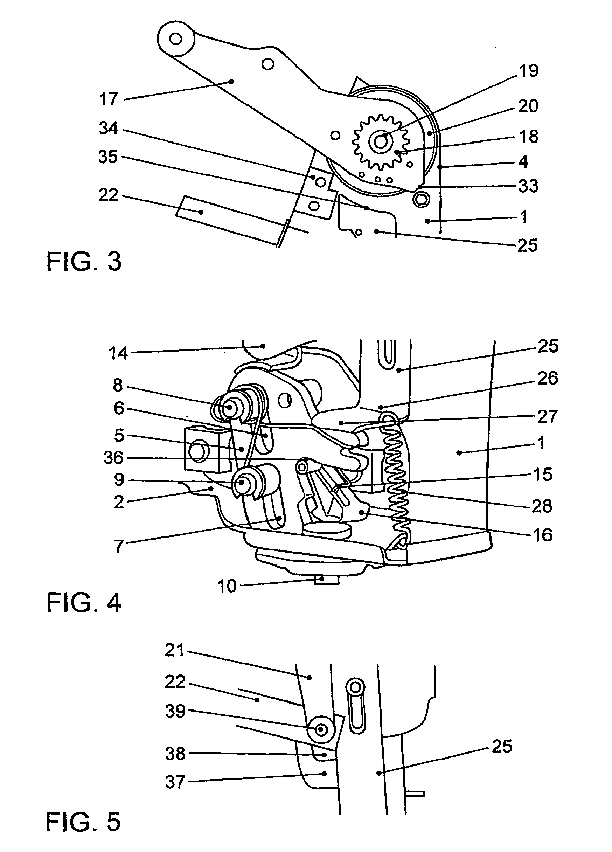

Das in Figur 1 dargestellte Sitzgestell 1 für die hintere Sitzreihe eines Kombifahrzeuges, die sowohl eine Dreier-Sitzbank als auch eine Zweier-Sitzbank sein kann, nimmt eine Sitzverriegelung 2 sowie eine der Sitzlehne 3 zugeordnete Lagerung 4 für die Lehnenklappung auf. Dabei besteht die Sitzverriegelung 2 im Wesentlichen aus einer vertikal beweglichen Sperrplatte 5, die zwei in vertikaler Richtung verlaufende Langlöcher 6, 7 besitzt, in die jeweils ein am Sitzgestell 1 befestigter Führungsbolzen 8, 9 eingreift, so dass die vertikale Bewegung der Sperrplatte 5 gewährleistet ist. In der aus Figur 1 ersichtlichen Position der Sperrplatte 5 befindet sie sich im verriegelten Zustand mit einem im nicht weiter dargestellten Fahrzeugboden integrierten Pilzbolzen 10. Zwecks Entriegelung steht die Sperrplatte 5 über einen im Sitzgestell 1 schwenkbar angeordneten Winkelhebel 11 gelenkig mit einer der Entnahme zugeordneten Schlaufe 12 in Verbindung. Während diese Verbindung mit dem ersten Schenkel 13 des Winkelhebels 11 erfolgt, steht dessen rechtwinklig zum ersten Schenkel 13 angeordneter zweiter Schenkel 14 gelenkig mit der Sperrplatte 5 in Verbindung. Somit sind die Voraussetzungen dafür geschaffen, dass beim Ziehen der der Entnahme zugeordneten Schlaufe 12 ihre horizontale Bewegung in eine vertikale Bewegung umgewandelt werden kann, bei der die Sperrplatte 5 nach oben bewegt wird, so dass eine Entriegelung der Sitzreihe erfolgt und aus dem Fahrgastraum entnommen werden kann. Der untere Führungsbolzen 9 nimmt gleichzeitig auch einen durch einen Federkörper 15 belasteten Abfragehebel 16 auf, wie insbesondere aus Figur 4 hervorgeht.

Die ebenfalls in das Sitzgestell 1 integrierte Lagerung 4 für die Lehnenklappung geht von einem in die Sitzlehne 3 integrierten Schwert 17 aus, zu dem ein eine Rastung 18 besitzendes Drehgelenk 19 gehört, das von einem in das Sitzgestell 1 integrierten Beschlag 20 aufgenommen wird. Um eine Lehnenkläppung über das Drehgelenk 19 zu ermöglichen, steht dieses mit seiner Rastung 18 gelenkig mit einem Winkelhebel 21 in Verbindung, der auf der dem Drehgelenk 19 gegenüberliegenden Seite gelenkig mit einer der Lehnenklappung zugeordneten Schlaufe 22 verbunden ist, so dass durch Ziehen dieser ihre translatorische Bewegung in eine rotierende Bewegung des Drehgelenkes 19 und damit in eine Schwenkbewegung des Schwertes 17, also auch der Sitzlehne 3 umgewandelt wird. Es ist ersichtlich, dass der Lehnenklappung darüber hinaus eine zweite Schlaufe 23 zugeordnet ist, die ebenfalls über einen Winkelhebel 24 gelenkig mit dem Drehgelenk 19 mit seiner Rastung 18 verbunden ist.

Damit beim Einbau der hinteren Sitzreihe in den Fahrgastraum eines Kombifahrzeuges das Aufstellen, also das Hochklappen der Sitzlehne 3 der Sitzreihe erst dann erfolgen kann, wenn durch die Sitzverriegelung 2 eine kraftschlüssige Verbindung mit dem im Fahrzeugboden angeordneten Pilzbolzen 10 hergestellt ist und umgekehrt die Sitzreihe erst dann aus dem Fahrgastraum entnommen werden kann, wenn zuvor die Sitzlehne 3 eine Tischposition einnehmend umgeklappt ist, steht das Schwert 17 der Sitzlehne 3 mit der Sperrplatte 5 der Sitzverriegelung 2 über eine Koppelstange in Wirkverbindung. Dabei ist die Koppelstange 25 vertikal verschiebbar im Sitzgestell 1 angeordnet und steht in jeder Position ihrer vertikalen Bewegung mit ihrem unteren Ende 26 lose mit einem horizontal verlaufenden Abschnitt 27 der Sperrplatte 5 in Verbindung, indem sie auf diesem aufliegt und unter der Kraft einer Zugfeder 28 steht - siehe auch Figur 4. Zur Durchführung ihrer vertikalen Verschiebung besitzt die Koppelstange 25 zwei in vertikaler Richtung verlaufende Langlöcher 29, 30, über die sie von im Sitzgestell 1 befestigten Führungsbolzen 31, 32 aufgenommen wird.

Um eine Blockierung der vertikal verschiebbar angeordneten Koppelstange 25 im verriegelten Zustand der Sitzreihe zu gewährleisten, so dass bei zurückgeklappter Sitzlehne 3 auch keine Entriegelung der Sitzreihe durch die Sperrplatte 5 im Zusammenwirken mit dem Pilzbolzen 10 möglich ist, besitzt das Schwert 17 der Sitzlehne 3, wie aus den Figuren 2 und 3 hervorgeht, eine Anformung 33, die bei zurückgeklappter Sitzlehne 3, also in der Sitzposition, durch einen Anschlag 34 begrenzt ist. Soll die Sitzreihe dem Fahrgastraum entnommen werden, so wird die Sitzlehne 3 zunächst in die aus Figur 3 ersichtliche Position des Schwertes 17, also in die Tischposition geschwenkt. Um das zu ermöglichen, besitzt die Koppelstange 25, wie ebenfalls die Figuren 2 und 3 zeigen, auf ihrer dem Schwert 17 zugerichteten Seite eine kreissegmentförmige Ausnehmung 35, durch die sichergestellt wird, dass die Anformung 33 mit Spiel die Koppelstange 25 passieren kann. Hat dabei die Sitzlehne 3 der Sitzreihe ihre Tischposition erreicht, so ist auch die Blockierung der Koppelstange 25 aufgehoben und durch Ziehen der der Entnahme zugeordneten Schlaufe 12 kann die Entriegelung der Sitzverriegelung 2 vorgenommen werden, bei der sich bedingt durch die Aufhebung der Blockierung durch die Koppelstange 25 die Sperrplatte 5 vertikal nach oben bewegt und dabei die Koppelstange 25 gegen die Kraft der Zugfeder 28 mit nach oben verschiebt.

Aus der durch die Koppelstange 25 eingenommenen Lage bei der Entnahme der Sitzreihe aus dem Fahrgastraum ergibt sich, dass die Sitzlehne 3 beim Einbau der Sitzreihe in den Fahrgastraum erst dann wieder aus der Tischposition zurückgeklappt werden kann, wenn die Sperrplatte 5 im verriegelten Zustand der Sitzreihe wieder kraftschlüssig mit dem Pilzbolzen 10 in Verbindung steht, da erst dann die unter der Kraft der Zugfeder 28 stehende Koppelstange 25 das Schwert 17 mit seiner Anformung 33 freigibt und damit das Zurückklappen der Sitzlehne 3 ermögücht. Dabei ist, wie die Figuren 1 und 4 zeigen, zu berücksichtigen, dass der Führungsbolzen 9 nicht nur die Sperrplatte 5, sondern auch den durch den Federkörper 15 belasteten Abfragehebel 16 aufnimmt, durch den die Sperrplatte 5 nach ihrer vertikalen Bewegung nach oben beim Entnehmen der Sitzreihe in ihrer Position gehalten wird, indem durch eine Anformung 36 des Abfragehebels 16 in Form einer Nase die Sperrplatte 5 in ihrer Position beim Entnehmen der Sitzreihe aus dem Fahrgastraum durch Verhaken arretiert ist. Wird ausgehend hiervon beim Einbau der Sitzreihe in den Fahrgastraum durch den Pilzbolzen 10 der Abfraghebel 16 berührt, so wird dieser von der Sperrplatte 5 weg bewegt. Dieses hat zur Folge, dass sobald die Sitzreihe richtig in den Pilzbolzen 10 drin steht, die Sperrplatte 5 federunterstützt nach unten gleiten kann. Gleichzeitig gleitet auch die unter der Wirkung der Zugfeder 28 stehende Koppelstange 25 wieder in ihre untere Ausgangsposition, so dass die Sitzlehne 3 über die der Lehnenklappung zugeordnete Schlaufe 22, 23 wieder aufgerichtet werden kann.

Wie die Figur 5 zeigt, besitzt die vertikal verschiebbar angeordnete Koppelstange 25 in ihrem oberen Bereich eine Anformung 37 in Form eines Hakens. Dieser nimmt in seiner Öffnung 38 bei Einnahme der Tischposition der Sitzlehne 3 nach Entriegelung der Sitzreihe das Gelenk 39 auf, über das die der Lehenklappung zugeordnete Schlaufe 22 über den Winkelhebel 21 mit dem eine Rastung 18 besitzenden Drehgelenk 19 in Verbindung steht. Somit wird durch diese Anformung 37 in Form eines Hebels in entriegelter Position der Sitzreihe ebenfalls ein Zurückklappen der Sitzlehne 3 verhindert.

### BEZUGSZEICHENLISTE

- 1: Sitzgestell
- 2: Sitzverriegelung
- 3: Sitzlehne
- 4: Lagerung
- 5: vertikal bewegliche Sperrplatte
- 6: Langlöcher
- 7: Langlöcher
- 8: Führungsbolzen
- 9: Führungsbolzen
- 10: Pilzbolzen
- 11: Winkelhebel
- 12: der Entnahme zugeordnete Schlaufe
- 13: erster Schenkel
- 14: zweiter Schenkel
- 15: Federkörper
- 16: Abfragehebel
- 17: Schwert
- 18: Rastung
- 19: Drehgelenk
- 20: Beschlag
- 21: Winkelhebel
- 22: der Lehnenklappung zugeordnete Schlaufen
- 23: der Lehnenklappung zugeordnete Schlaufen
- 24: Winkelhebel
- 25: Koppelstange
- 26: unteres Ende
- 27: horizontal verlaufender Abschnitt
- 28: Zugfeder
- 29: Langlöcher
- 30: Langlöcher
- 31: Führungsbolzen
- 32: Führungsbolzen
- 33: Anformung
- 34: Anschlag
- 35: kreissegmentförmige Ausnehmung
- 36: Anformung in Form einer Nase
- 37: Anformung in Form eines Hakens
- 38: Öffnung
- 39: Gelenk

- Y: Einzelheit
- Z: Einzelheit

## Patentansprüche

1. Sicherheitssystem für einen Fahrzeugsitz, insbesondere für die hintere Sitzreihe eines Kombifahrzeuges, bei der über einen mit dem Schwert (17) der Sitzlehne (3) in Verbindung stehenden Umlenkhebel durch Ziehen einer der Lehnenklappung zugeordneten Schlaufe (22, 23) ihre translatorische Bewegung in eine rotierende Bewegung der im Beschlag (20) des Schwertes (17) gelagerten Schwenkachse umwandelbar ist und bei der zur Entriegelung der Sitzreihe eine durch Ziehen betätigbare, der Entnahme zugeordnete Schlaufe (12) vorgesehen ist, wobei ihre im Wesentlichen horizontale Bewegung in eine vertikale Bewegung einer Sperrplatte (5) umwandelbar ist, die in verriegelter Position der hinteren Sitzreihe mit einem in den Fahrzeugboden integrierten Pilzbolzen (10) kraftschlüssig in Verbindung steht, **dadurch gekennzeichnet, dass**
das Schwert (17) der Sitzlehne (3) über eine Koppelstange (25) mit der der Verriegelung der Sitzreihe dienenden Sperrplatte (5) in Wirkverbindung steht, derart, dass eine vertikale Bewegung der Sperrplatte (5) nach oben und damit eine Entriegelung der Sitzreihe erst dann vornehmbar ist, wenn die Sitzlehne (3) der Sitzreihe eine Tischposition einnehmend umgeklappt ist und ein Zurückklappen der Sitzlehne (3) der Sitzreihe in die Sitzposition erst dann vollziehbar ist, wenn die Verriegelung der Sitzreihe durch die Sperrplatte (5) im Zusammenwirken mit dem Pilzbolzen (10) abgeschlossen ist, die Koppelstange (25) vertikal verschiebbar im Sitzgestell (1) der Sitzreihe angeordnet ist und zur Blockierung ihrer vertikalen Verschiebung nach oben das Schwert (17) der Sitzlehne (3) auf seiner der Koppelstange (25) zugerichteten Seite eine Anformung (33) besitzt, durch die die vertikale Verschiebung der Koppelstange (25) nach oben nach Einnahme der Tischposition der Sitzlehne (3) der Sitzreihe freigebbar ist.

2. Sicherheitssystem nach Anspruch 1,
**dadurch gekennzeichnet, dass**
die Koppelstange (25) vertikal verschiebbar im Sitzgestell (1) der Sitzreihe angeordnet ist und in jeder Position der vertikal bewegbaren Sperrplatte (5) mit ihrem unteren Ende (26) lose mit einem horizontal verlaufenden Abschnitt (27) der Sperrplatte (5) durch Aufliegen in Verbindung steht, während zur Blockierung ihrer vertikalen Verschiebung nach oben das Schwert (17) der Sitzlehne (3) auf seiner der Koppelstange (25) zugerichteten Seite eine Anformung (33) besitzt, durch die die vertikale Verschiebung der Koppelstange (25) nach oben nach Einnahme der Tischposition der Sitzlehne (3) der Sitzreihe freigebbar ist.

3. Sicherheitssystem nach Anspruch 2,
**dadurch gekennzeichnet, dass**
die vertikal verschiebbar im Sitzgestell (1) der Sitzreihe angeordnete Koppelstange (25) vorzugsweise zwei in vertikaler Richtung verlaufende Langlöcher (29, 30) besitzt, über die im Sitzgestell (1) der Sitzreihe befestigte Führungsbolzen (31, 32) vertikal verschiebbar aufnehmbar sind.

4. Sicherheitssystem nach Anspruch 3,
**dadurch gekennzeichnet, dass**
die Koppelstange (25) in jeder Position der vertikal bewegbaren Sperrplatte (5) mit ihrem unteren Ende (26) lose mit dem horizontal verlaufenden Abschnitt (27) der Sperrplatte (5) durch Aufliegen in Verbindung steht und unter der Kraft einer in Richtung der Sperrplatte (5) wirkenden Zugfeder (28) steht.

5. Sicherheitssystem nach Anspruch 4,
**dadurch gekennzeichnet, dass**
der Anformung (33) des Schwertes (17) der Sitzlehne (3) ein am Sitzgestell (1) befestigter, die Anformung (33) und damit das Schwert (17) der Sitzlehne (3) bei ihrem Zurückklappen in die Sitzposition begrenzender Anschlag (34) zugeordnet ist.

6. Sicherheitssystem nach Anspruch 5,
**dadurch gekennzeichnet, dass**
die vertikal verschiebbar im Sitzgestell (1) angeordnete Koppelstange (25) auf ihrer dem Schwert (17) der Sitzlehne (3) zugerichteten Seite eine kreissegmentförmige Ausnehmung (35) besitzt.

7. Sicherheitssystem nach Anspruch 6,
**dadurch gekennzeichnet, dass**
die vertikal verschiebbar im Sitzgestell (1) der Sitzreihe angeordnete Koppelstange (25) in ihrem oberen Bereich eine nach oben offene Anformung (37) in Form eines Hakens besitzt, der bei Einnahme der Tischposition der Sitzlehne (3) und der sich anschließenden Entriegelung der Sitzreihe in seiner Öffnung (38) das Gelenk (39) aufnimmt, über das die der Lehnenklappung zugeordnete Schlaufe (22) über den Winkelhebel (21) mit dem eine Rastung (18) besitzenden Drehgelenk (19) im Beschlag (20) des Schwertes (17) der Sitzlehne (3) in Verbindung steht.

8. Sicherheitssystem nach Anspruch 7,
**dadurch gekennzeichnet, dass**
die Sperrplatte (5) zwei in vertikaler Richtung verlaufende Langlöcher (6, 7) besitzt, die am Sitzgestell (1) befestigte Führungsbolzen (8, 9) aufnehmen, wobei der untere Führungsbolzen (9) gleichzeitig auch einen durch einen Federkörper (15) belasteten Abfragehebel (16) aufnimmt, durch den die Sperrplatte (5) nach ihrer vertikalen Bewegung nach oben beim Entnehmen der Sitzreihe in ihrer Position haltbar ist.

9. Sicherheitssystem nach Anspruch 8,
**dadurch gekennzeichnet, dass**
der durch den Federkörper (15) belastete Abfragehebel (16) eine Anformung (36) in Form einer Nase besitzt, durch die die Sperrplatte (5) in ihrer Position durch Verhaken arretierbar ist.

10. Sicherheitssystem nach Anspruch 9,
**dadurch gekennzeichnet, dass**
die zur Entriegelung der Sitzreihe durch Ziehen betätigbare, der Entnahme zugeordnete Schlaufe (12) mit einem ersten Schenkel (13) eines schwenkbar am Sitzgestell (1) angeordneten Winkelhebels (11) gelenkig verbunden ist, während dessen zweiter Schenkel (14) gelenkig mit der Sperrplatte (5) in Verbindung steht und rechtwinklig zum ersten Schenkel (13) angeordnet ist.

11. Sicherheitssystem nach einem oder mehreren der Ansprüche 1 bis 10,
**dadurch gekennzeichnet, dass**
die Sitzreihe in ihrer verriegelten Position vorzugsweise durch vier Sperrplatten (5) mit vier in den Fahrzeugboden integrierten Pilzbolzen (10) kraftschlüssig verbunden ist.

## Claims

1. Safety system for a vehicle seat, in particular for the rear row of seats of an estate vehicle, in which, by pulling a loop (22, 23) associated with the folding of the backrest, the translational movement thereof can be converted via a reversing lever connected to the strut (17) of the seat back (3) into a rotating movement of the pivot spindle mounted in the fitting (20) of the strut (17), and in which, in order to unlock the row of seats, a loop (12) which is actuable by pulling and is associated with the removal operation is provided, wherein the substantially horizontal movement of said loop can be converted into a vertical movement of a blocking plate (5) which, in the locked position of the rear row of seats, is frictionally connected to a mushroom-headed bolt (10) integrated into the floor of the vehicle, **characterized in that** the strut (17) of the seat back (3) is operatively connected to the locking plate (5), which serves to lock the row of seats, via a coupling rod (25) in such a manner that the blocking plate (5) can be moved vertically upwards and therefore the row of seats unlocked only when the seat back (3) of the row of seats has been folded over to take up a table position, and the seat back (3) of the row of seats can be folded back into the seat position only when the row of seats has been locked by the blocking plate (5) in interaction with the mushroom-headed bolt (10), the coupling rod (25) is arranged in a vertically displaceable manner in the seat frame (1) of the row of seats and, in order to block the vertical displacement of said coupling rod upwards, that side of the strut (17) of the seat back (3) which faces the coupling rod (25) has an integral formation (33) by means of which the vertical displacement of the coupling rod (25) upwards can be enabled after the seat back (3) of the row of seats has taken up the table position.

2. Safety system according to Claim 1, **characterized in that** the coupling rod (25) is arranged in a vertically displaceable manner in the seat frame (1) of the row of seats and, in each position of the vertically movable blocking plate (5), is connected loosely by its lower end (26) to a horizontally running section (27) of the blocking plate (5) by resting thereon whereas, in order to block the vertical displacement of said coupling rod upwards, that side of the strut (17) of the seat back (3) which faces the coupling rod (25) has an integral formation (33) by means of which the vertical displacement of the coupling rod (25) upwards can be enabled after the seat back (3) of the row of seats has taken up the table position.

3. Safety system according to Claim 2, **characterized in that** the coupling rod (25) which is arranged in a vertically displaceable manner in the seat frame (1) of the row of seats preferably has two elongated holes (29, 30) which run in the vertical direction and via which guide bolts (31, 32) fastened in the seat frame (1) of the row of seats can be accommodated in a vertically displaceable manner.

4. Safety system according to Claim 3, **characterized in that**, in each position of the vertically movable blocking plate (5), the coupling rod (25) is connected loosely by its lower end (26) to the horizontally extending section (27) of the blocking plate (5) by resting thereon and is subjected to the force of a tension spring (28) acting in the direction of the blocking plate (5).

5. Safety system according to Claim 4, **characterized in that** the integral formation (33) of the strut (17) of the seat back (3) is assigned a stop (34) which is fastened to the seat frame (1) and restricts the integral formation (33) and therefore the strut (17) of the seat back (3) upon the folding back of the latter into the seat position.

6. Safety system according to Claim 5, **characterized in that** the coupling rod (25) which is arranged in a vertically displaceable manner in the seat frame (1) has a recess (35) in the shape of a segment of a circle on the side thereof which faces the strut (17) of the seat back (3).

7. Safety system according to Claim 6, **characterized in that** the coupling rod (25) which is arranged in a vertically displaceable manner in the seat frame (1) of the row of seats has, in the upper region thereof, an upwardly open integral formation (37) in the form of a hook which, when the seat back (3) takes up the table position and the row of seats is subsequently unlocked, receives, in the opening (38) thereof, the joint (39) via which the loop (22) associated with the folding of the back rest is connected via the angle lever (21) to the rotary joint (19), which has a latching means (18), in the fitting (20) of the strut (17) of the seat back (3).

8. Safety system according to Claim 7, **characterized in that** the blocking plate (5) has two elongated holes (6, 7) which run in the vertical direction and receive guide bolts (8, 9) fastened to the seat frame (1), the lower guide bolt (9) at the same time also receiving an interrogation lever (16) which is loaded by a spring body (15) and by means of which the blocking plate (5), after the vertical movement thereof upwards, can be kept in its position during removal of the row of seats.

9. Safety system according to Claim 8, **characterized in that** the interrogation lever (16), which is loaded by the spring body (15), has an integral formation (36) in the form of a lug by means of which the blocking plate (5) can be locked in its position by interlocking.

10. Safety system according to Claim 9, **characterized in that** the loop (12), which can be actuated by pulling in order to release the row of seats and which is associated with the removal operation, is connected in an articulated manner to a first limb (13) of an angle lever (11) arranged pivotably on the seat frame (1), while the second limb (14) of said angle lever is connected in an articulated manner to the blocking plate (5) and is arranged at a right angle to the first limb (13).

11. Safety system according to one or more of Claims 1 to 10, **characterized in that**, in its locked position, the row of seats is connected in a frictional manner preferably by means of four blocking plates (5) to four mushroom-headed bolts (10) integrated in the vehicle floor.

## Revendications

1. Système de sécurité pour un siège de véhicule, notamment pour la banquette arrière d'une voiture commerciale, dans laquelle son mouvement de translation peut être transformé en un mouvement de rotation de l'axe de pivotement disposé dans l'armature (20) de l'élément en pointe (17) par l'intermédiaire d'un levier de déviation relié à l'élément en pointe (17) du dossier de siège (3) par traction d'une boucle (22, 23) associée au rabat de dossier et dans laquelle une boucle (12) associée au retrait et pouvant être actionnée par traction pour déverrouiller la banquette est prévue, son mouvement pour l'essentiel horizontal pouvant être transformé en un mouvement vertical d'une plaque de blocage (5) reliée par complémentarité de forces, en position verrouillée de la banquette arrière, à un boulon champignon (10) intégré dans le plancher de véhicule intégré, **caractérisé en ce que** l'élément en pointe (17) du dossier de siège (3) est en liaison active avec la plaque de blocage (5) servant de verrouillage de banquette par l'intermédiaire d'une tige de couplage (25), de telle sorte qu'un mouvement vertical de la plaque de blocage (5) vers le haut et ainsi un déverrouillage de la banquette ne sont réalisables que lorsque le dossier de siège (3) de la banquette est rabattu en prenant une position de table et qu'un rabattement en arrière du dossier de siège (3) de la banquette dans la position assise n'est réalisable que lorsque le verrouillage de la banquette est empêché par la plaque de blocage (5) en interaction avec le boulon champignon (10), que la tige de couplage (25) est disposée de façon à pouvoir être déplacée dans le plan vertical dans le châssis de siège (1) de la banquette et que l'élément en pointe (17) du dossier de siège (3) possède, sur son coté orienté vers la tige de couplage (25), un élément moulé (33) pour bloquer son déplacement vertical vers le haut, le déplacement vertical de la tige de couplage (25) vers le haut pouvant être libéré à l'aide de cet élément en prenant la position de table du dossier de siège (3) de la banquette.

2. Système de sécurité selon la revendication 1, **caractérisé en ce que** la tige de couplage (25) est disposée de façon à pouvoir être déplacée verticalement dans le châssis de siège (1) de la banquette et est reliée par contact à un segment s'étendant horizontalement (27) de la plaque de blocage (5), dans chaque position de la plaque de blocage (5) mobile dans le plan vertical, avec son extrémité inférieure (26) lâche tandis que pour bloquer son déplacement vertical vers le haut, l'élément en pointe (17) du dossier de siège (3) possède, sur son côté orienté vers la tige de couplage (25), un élément moulé (33) à l'aide duquel le déplacement vertical vers le haut de la tige de couplage (25) peut être libéré lorsque le dossier de siège (3) de la banquette est en position de table.

3. Système de sécurité selon la revendication 2, **caractérisé en ce que** la tige de couplage (25) disposée de façon à pouvoir être déplacée verticalement dans le châssis de siège (1) de la banquette possède de préférence deux trous oblongs (29, 30) s'étendant dans la direction verticale par le biais desquels les boulons de guidage (31, 32) fixés dans le châssis de siège (1) de la banquette peuvent être logés de façon à pouvoir se déplacer dans le plan vertical.

4. Système de sécurité selon la revendication 3, **caractérisé en ce que** la tige de couplage (25) est reliée par contact au segment s'étendant horizontalement (27) de la plaque de blocage (5), dans chaque position de la plaque de blocage (5) mobile dans le plan vertical, avec son extrémité inférieure (26) lâche, et se trouve sous l'influence de la force d'un ressort de traction (28) s'exerçant en direction de la plaque de blocage (5).

5. Système de sécurité selon la revendication 4, **caractérisé en ce qu'**une butée (34) fixée au châssis de siège (1) et délimitant l'élément moulé (33) et ainsi l'élément en pointe (17) du dossier de siège (3) lors de son rabattement en arrière dans la position assise est associé à l'élément moulé (33) de l'élément en pointe (17) du dossier de siège (3).

6. Système de sécurité selon la revendication 5, **caractérisé en ce que** la tige de couplage (25) disposée de façon à pouvoir être déplacée verticalement dans le châssis de siège (1) possède, sur son côté orienté vers l'élément en pointe (17) du dossier de siège (3), un évidement (35) en forme de segment de cercle.

7. Système de sécurité selon la revendication 6, **caractérisé en ce que** la tige de couplage (25) disposée de façon à pouvoir être déplacée verticalement dans le châssis de siège (1) de la banquette possède, dans sa zone supérieure, un élément moulé (37) ouvert vers le haut prenant la forme d'un crochet qui loge dans son ouverture (38), lorsque le dossier de siège (3) prend la position de table et donc que la banquette est déverrouillée, l'articulation (39) via laquelle la boucle (22) associée au rabat de dossier est reliée, par le biais du levier en angle (21), à l'articulation (19) possédant un élément d'arrêt (18) dans l'armature (20) de l'élément en pointe (17) du dossier de siège (3).

8. Système de sécurité selon la revendication 7, **caractérisé en ce que** la plaque de blocage (5) possède deux trous oblongs (6, 7) s'étendant dans la direction verticale qui logent des boulons de guidage (8, 9) fixés au châssis de siège (1), le boulon de guidage (9) inférieur logeant également en même temps un levier d'interrogation (16) sollicité par un corps de ressort (15) et à travers lequel la plaque de blocage (5) peut être maintenue en position après son mouvement vertical vers le haut lors du retrait de la banquette.

9. Système de sécurité selon la revendication 8, **caractérisé en ce que** le levier d'interrogation (16) sollicité par le corps de ressort (15) possède un élément moulé (36) prenant la forme d'un bec à travers lequel la plaque de blocage (5) peut être bloquée dans sa position par accrochage.

10. Système de sécurité selon la revendication 9, **caractérisé en ce que** la boucle (12) pouvant être actionnée par traction pour déverrouiller la banquette et associée à son retrait peut être reliée de façon articulée à un premier côté (13) d'un levier d'angle (11) disposé de façon pivotante au niveau du châssis de siège (1) tandis que son deuxième côté (14) est relié de façon articulée à la plaque de blocage (5) et est disposé perpendiculairement au premier côté (13).

11. Système de sécurité selon l'une quelconque des revendications 1 à 10 ou plusieurs d'entre elles, **caractérisé en ce que** la banquette est reliée par complémentarité de forces, dans sa position verrouillée, à quatre boulons champignon (10) intégrés dans le plancher de véhicule, de préférence par le biais de quatre plaques de blocage (5).
